# EUROPÄISCHE PATENTSCHRIFT

(11) **EP 2 539 199 B1**
(45) Veröffentlichungstag und Bekanntmachung des Hinweises auf die Patenterteilung: **05.09.2018**
(21) Anmeldenummer: 11704221.8
(22) Anmeldetag: 17.02.2011
(51) Int. Cl.: B61F 19/00

(54) **RADSATZWELLENSCHUTZ**
WHEEL SET SHAFT PROTECTION
PROTECTION D'AXE D'ESSIEU

(30) Priorität: 22.02.2010 DE 102010009437
(43) Veröffentlichungstag der Anmeldung: 02.01.2013
(73) Patentinhaber: Siemens Aktiengesellschaft, 80333 München (DE)
(72) Erfinder: MEYER, Heiko, 95473 Creußen (DE); MÄRKL, Hans, Jürgen, 86391 Stadtbergen (DE); RÜF, Guntram, A-8045 Graz (AT); SCHMIDT, Ralph, 16356 Ahrensfelde (DE); THIESS, Robert, 85716 Unterschleißheim (DE); VOLLERT, Jens, 82140 Olching (DE)
(86) Internationale Anmeldenummer: PCT/EP2011/052335
(87) Internationale Veröffentlichungsnummer: WO 2011/101401

(56) Entgegenhaltungen:
- EP-A1- 1 508 455
- WO-A1-00/59764
- FR-A- 358 019
- FR-A- 554 005
- GB-A- 191 318 287

## Beschreibung

Die Erfindung betrifft eine Radsatzwelle eines Schienenfahrzeuges nach dem Oberbegriff des Patentanspruches 1.

Die Erfindung betrifft ferner ein Drehgestell sowie ein Schienenfahrzeug mit einer solchen Radsatzwelle.

Schienenfahrzeuge weisen in der Regel einen Wagenkasten sowie mehrere Drehgestelle auf, auf denen der Wagenkasten abgestützt ist. Die Drehgestelle verfügen in der Regel über mehrere Radsätze, von denen jeder jeweils zwei Schienenräder und eine die Räder miteinander verbindende Radsatzwelle aufweist. Insbesondere während der Fahrt des Schienenfahrzeuges sind die Radsatzwellen Kollisionen mit Kollisionskörpern, wie Gleisschotter, Eis, Ästen oder Tieren, ausgesetzt. Hierbei kommt es zur Beschädigung der Radsatzwelle und insbesondere ihrer Lackierung oder Beschichtung. Dies führt zur Korrosion des Wellenwerkstoffs sowie zur Rissbildung. Die Radsatzwelle muss daher in der Regel aufwändig und kostenintensiv ausgebessert werden.

Bislang werden die Radsatzwellen zum Schutz vor Beschädigungen durch Kollisionskörper aufwändig beschichtet. Darüber hinaus sind aus dem Stand der Technik Stoßbleche bekannt, welche am Fahrmotor, am Drehgestellrahmen und am Getriebekasten des Drehgestells befestigt sind. Die aus dem Stand der Technik bekannten Vorrichtungen sind jedoch nicht ausreichend, um einen wirksamen Schutz der Radsatzwelle vor Beschädigungen aus Kollisionen zu gewährleisten.

Die europäische Veröffentlichung EP 1 508 455 A1 offenbart eine Radachse eines Schienenfahrzeugs, um die eine Banderole aus Polyurethan gewickelt ist, wobei deren Endseiten abgeschrägt sind und einander überlappen. Um das Umwickeln zu erleichtern, weist die Banderole axial verlaufende Nuten auf ihrer Mantelinnen- (Fig. 1 bis 4) oder -außenseite (Fig. 3A und 4A) auf. Die Banderole wird durch mehrere mechanische Haltemittel auf der Radachse befestigt.

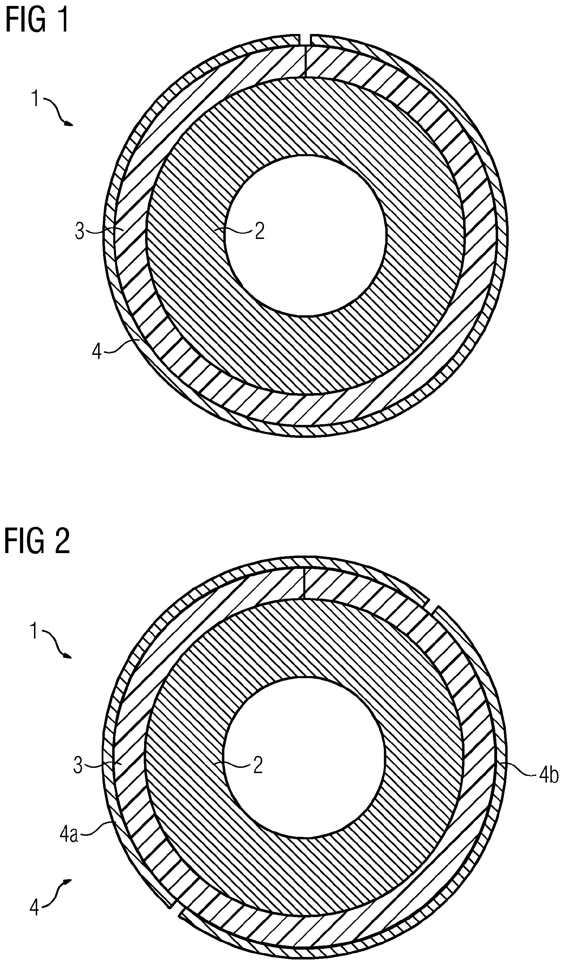

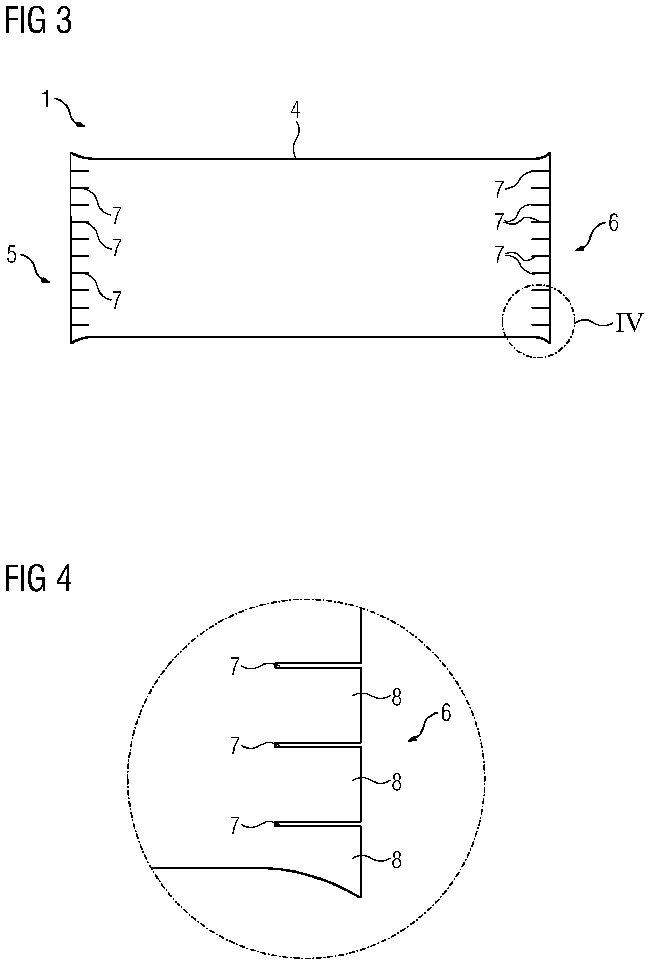

Aus der internationalen Veröffentlichung WO 00/59764 A1 ist eine Schutzeinrichtung für eine Radachse eines Schienenfahrzeugs bekannt. Die Schutzeinrichtung weist die Form eines kreiszylindrischen Rohrs mit einem Schlitz auf, der sich axial (Fig. 2 bis 4) oder schraubenlinienförmig (Fig. 1) von einem zum anderen Ende des Rohrs erstreckt. Die Schutzeinrichtung umfasst zwei konzentrische Schichten (Fig. 1 bis 3), eine innere Schicht aus geschäumten Kunststoff, die an eine äußere Schicht aus elastischem Kunststoff geklebt ist. Die äußere Schicht hält die Schutzeinrichtung aufgrund ihres elastischen Kunststoffes auf der Radachse fest. Zur Demontage der Schutzeinrichtung muss der Schlitz unter Krafteinwirkung so stark aufgeweitet werden, dass die Schutzeinrichtung von der Radachse entfernt werden kann. Die Schutzeinrichtung (Fig. 3) kann auch zwei Schlitze aufweisen, so dass die konzentrischen Schichten aus je zwei Halbzylindern bestehen, wobei die äußeren Halbzylinder durch Schraubverbindungen miteinander verbunden sind. Die Schutzeinrichtung (Fig. 4) kann auch nur eine einzige Schicht aus elastischem Kunststoff mit einem Schlitz umfassen, zu dessen Schutz eine Verschlusseinrichtung mit einem Haken und mit diesen umgreifenden Schlitzschutzmitteln vorgesehen sind.

Aufgabe der Erfindung ist es daher, eine Radsatzwelle bereitzustellen, mit der ein wirksamer und kostengünstiger Schutz derselben bereitgestellt ist.

Die Erfindung löst diese Aufgabe durch eine gattungsgemäße Radsatzwelle mit den im kennzeichnenden Teil des Patentanspruches 1 angegebenen Merkmalen.

Die Erfindung löst diese Aufgabe ferner durch ein Schienenfahrzeug, das eine Radsatzwelle aufweist, die mit einer solchen Schutzvorrichtung ausgerüstet ist.

Darüber hinaus löst die Erfindung die Aufgabe durch ein Drehgestell, das eine Radsatzwelle aufweist, die mit einer solchen Schutzvorrichtung bestückt ist.

Erfindungsgemäß ist eine Schutzvorrichtung mit einer Elastomermatte bereitgestellt, die mit Hilfe der Haltemittel einfach und daher kostengünstig an einer Radsatzwelle befestigt werden kann. Die Bewegungsenergie eines Kollisionskörpers, die bei einer Kollision durch die erfindungsgemäße Schutzvorrichtung von der Radsatzwelle aufzunehmen ist, wird elastisch von der Elastomermatte bedämpft und somit auf eine größere Fläche verteilt. Auf diese Weise unterbleibt eine nachteilige Beschädigung der Radsatzwelle, so dass die Lebensdauer erhöht und insbesondere die Kosten zur Wartung der Radsatzwelle vermindert sind. Dabei ist die Elastomermatte hinsichtlich ihrer Dimensionierung, also hinsichtlich ihrer Länge, Breite und Dicke, an die Radsatzwellengeometrie anpassbar. Im Rahmen der Erfindung ist somit ein direkter Kontakt zwischen Kollisionskörper und Radsatzwelle verhindert. Die Schutzvorrichtung umfasst ein Gehäuse aus einem formfesten Material, das die Elastomermatte zumindest teilweise umschließt. Vorteilhafterweise umschließt das Gehäuse die Elastomermatte vollständig. Durch das Gehäuse wird der Schutz der Radsatzwelle noch weiter erhöht. So wird die Bewegungsenergie des Kollisionskörpers zunächst von dem formfesten Gehäuse aufgenommen und erst anschließend in die Elastomermatte eingeleitet und von dieser bedämpft, so dass die Gefahr einer Beschädigung der Elastomermatte verringert ist. Das Gehäuse weist an seinen beiden gegenüberliegenden freien Enden, die im montierten Zustand jeweils einem Rad zugewandt sind, Einschnitte auf. Aufgrund der Einschnitte können die von den Einschnitten begrenzten Zungen des Bleches einfach verbogen werden, so dass das Gehäuse auf einfache Weise an die Geometrie der Radsatzwelle angepasst werden kann.

Die erfindungsgemäße Schutzvorrichtung ist einfach ohne großen personellen Aufwand an der Radsatzwelle zu montieren. Auch eine Demontage der Schutzvorrichtung ist in kürzester Zeit durchführbar.

Die Elastomermatte besteht beispielsweise aus einem zweckmäßigen Elastomerwerkstoff. Der Elastomerwerkstoff ist im Rahmen der Erfindung grundsätzlich beliebig. Er sollte jedoch elastisch genug sein, so dass die Elastomermatte selbst bei einer größeren Dicke einfach und ohne zu großen Kraftaufwand um die Radsatzwelle gelegt werden kann. Darüber hinaus sollte der Werkstoff so eine ausreichende Festigkeit aufweisen, so dass eine vorschnelle Beschädigung verhindert ist.

Vorteilhafterweise sind die Elastomermatte und/oder das Gehäuse so ausgestaltet, dass nach der Montage der Schutzvorrichtung an die Radsatzwelle diese vollständig umschlossen ist. Auf diese Weise ist die Radsatzwelle vollständig geschützt.

Gemäß einer Ausgestaltung der Erfindung bestehen das Gehäuse und/oder die Elastomermatte aus separaten Teilen. Bei einer bevorzugten Ausgestaltung der Erfindung besteht das Gehäuse aus einem oder aus zwei Teilen, wobei die Elastomermatte einstückig ausgebildet ist. Die Ausgestaltung der Vorrichtung insgesamt oder von Teilen der Schutzvorrichtung durch separate Bauteile erleichtert die Montage.

Zweckmäßigerweise weist das Gehäuse wenigstens eine Überlappungsbiegung zum Ausbilden einer umfänglichen Gehäuseüberlappung auf. Gemäß dieser Ausgestaltung der Erfindung ist an den im montierten Zustand einander zugewandten freien Umfangsseiten des Gehäuses eine in der Seitenansicht S-förmige Biegung ausgebildet, so dass wenigstens eine freie Umfangskante eine ihr zugewandte freie Umfangskante dachartig überragt. Ein Freiraum zwischen den Gehäuseabschnitten und der Radsatzwelle ist auf diese Weise vermieden.

Zweckmäßigerweise besteht das Gehäuse aus einem Blech. Andere formfeste Materialien sind beispielsweise Kunststoffe, insbesondere faserverstärkte Kunststoffe oder dergleichen. Der Blechwerkstoff ist vorzugsweise ein rostfreier Stahl.

Als Haltemittel sind Schlauchschellen oder Spannverschlüsse vorteilhaft. Diese können kostengünstig bezogen werden und ermöglichen ein schnelles Anbringen der Schutzvorrichtung an die Radsatzwelle. Dabei umschließen die Haltemittel die Elastomermatte und gegebenenfalls das Gehäuse umfänglich.

Auch die Variante der erfindungsgemäßen Schutzvorrichtung, die ein Gehäuse aufweist, kann schnell und einfach montiert und demontiert werden. Eine Prüfung des Gehäuses ist ebenfalls schnell und ohne großen Aufwand möglich. So kann eine Prüfung beispielsweise durch in Augenscheinnahme des Gehäuses durchgeführt werden. Darüber hinaus können die Welle und das Gehäuse durch komplexere optische Prüfung untersucht werden. Auch eine Ultraschallprüfung der Radsatzwelle mit montierter Vorrichtung ist im Rahmen der Erfindung möglich. Die erfindungsgemäße Vorrichtung ist kostengünstig herstellbar und einfach an die Radsatzwelle anzubringen. Dabei werden geringe Anforderungen an die Fertigungstoleranzen gestellt. Die erfindungsgemäße Schutzvorrichtung eignet sich darüber hinaus auch für Schienenfahrzeuge mit einer maximalen Geschwindigkeit von über 160 km/h.

Weitere Ausführungsbeispiele und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: eine Querschnittsansicht eines ersten Ausführungsbeispiels der erfindungsgemäßen Radsatzwelle mit Schutzvorrichtung im montierten Zustand,
- Figur 2: ein weiteres Ausführungsbeispiel der erfindungsgemäßen Radsatzwelle mit Schutzvorrichtung im montierten Zustand,
- Figur 3: eine Draufsicht auf die erfindungsgemäße Radsatzwelle gemäß Figur 1,
- Figur 4: eine vergrößerte Darstellung des Endbereichs der Schutzvorrichtung gemäß Figur 3,

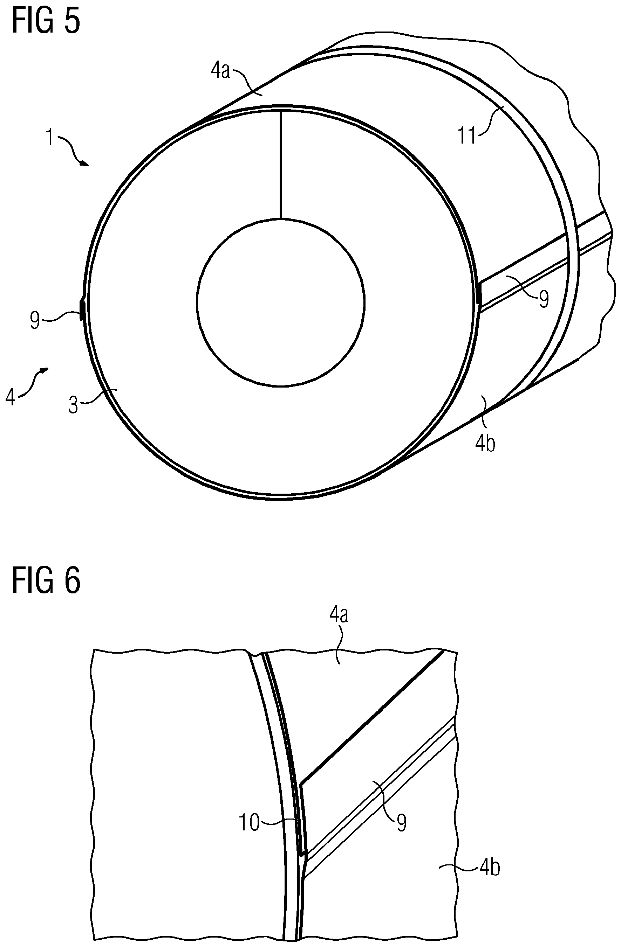

- Figur 5: eine perspektivische Ansicht eines weiteren Ausführungsbeispiels der Schutzvorrichtung und

- Figur 6: eine vergrößerte Darstellung eines Überlappungsbereichs der Schutzvorrichtung gemäß Figur 5 zeigen.

Figur 1 zeigt ein Ausführungsbeispiel der erfindungsgemäßen Schutzvorrichtung 1 in einem Zustand, in dem diese an eine Radsatzwelle 2 montiert ist. Die Schutzvorrichtung 1 umfasst eine Elastomermatte 3 sowie ein aus Blech gefertigtes Gehäuse 4. Das Blech des Gehäuses 4 besteht aus rostfreiem Stahl. Sowohl das Gehäuse 4 als auch die Elastomermatte 3 sind einstückig ausgebildet. Die Dicke der Elastomermatte 3 und ihre Biegeelastizität sind aufeinander so abgestimmt, dass sich die Elastomermatte 3 einfach an die Radsatzwelle 2 anlegen lässt. Entsprechendes gilt für das Gehäuse 4. Dabei ist es nicht notwendig, dass die beiden freien Enden des Bleches im montierten Zustand einander anstoßen. Eine kleine Lücke zwischen den beiden freien Enden, wie in Figur 1 dargestellt ist, ist durchaus hinnehmbar.

Zum Halten der Elastomermatte 3 sowie des Gehäuses 4 an der Radsatzwelle 2 sind in Figur 1 nicht dargestellte Verbindungsmittel in Form von Schlauchschellen vorgesehen.

Figur 2 zeigt ein von Figur 1 abweichendes Ausführungsbeispiel der erfindungsgemäßen Schutzvorrichtung 1, wobei erkennbar ist, dass das Gehäuse 4 nicht mehr wie in Figur 1 einstückig ausgebildet ist. Vielmehr besteht das Gehäuse 4 aus zwei separaten Gehäuseteilen 4a und 4b, die gemeinsam über Verbindungsmittel in Form von Schlauchschellen an der Radsatzwelle 2 gehalten sind. Die Elastomermatte 3 ist jedoch wie in Figur 1 einstückig ausgebildet. Die zweistückige Ausgestaltung des Gehäuses 4 erleichtert die Montage. Die Gehäuseteile 4a und 4b können entsprechend vorgeformt werden, so dass ein weniger biegeelastisches Material ausgewählt werden kann. Dies erhöht die Stoßfestigkeit des Gehäuses 4.

Figur 3 zeigt die Schutzvorrichtung 1 gemäß Figur 1 in einer Draufsicht. Es ist erkennbar, dass das Gehäuse 4 an seinen freien einander gegenüberliegenden Enden 5 und 6 Einschnitte 7 aufweist.

Figur 4 zeigt das freie Ende 6 der Schutzvorrichtung 1 gemäß Figur 3 in einer vergrößerter Darstellung, in der die Einschnitte 7 genauer erkennbar sind. Insbesondere ist erkennbar, dass die Einschnitte 7 Zungen 8 begrenzen, die leicht verbogen werden können, so dass das Gehäuse 4 einfach an die Geometrie der Radsatzwelle 2 angepasst werden kann, die sich in der Regel in ihrem Endbereich, an dem die Räder montiert sind, verdickt. Die Zungen 8 können einfach nach außen gebogen werden, so dass sich beim Montieren des Gehäuses 4 dieses leicht an die Geometrie der Radsatzwelle 2 anpassen lässt.

Figur 5 zeigt ein weiteres Ausführungsbeispiel der erfindungsgemäßen Schutzvorrichtung 1 in einer perspektivischen Darstellung. Die Radsatzwelle 2 ist aus Gründen einer besseren Übersicht figürlich nicht dargestellt. Es ist erkennbar, dass das die Elastomermatte 3 ummantelnde Gehäuse 4 wieder aus zwei separaten Gehäuseteilen 4a und 4b zusammengesetzt ist. Jeder Gehäuseteil 4a, 4b weist an einem seiner freien Umfangsseiten jeweils eine Überlappungsbiegung 9 auf, so dass an diesen Stellen der Außendurchmesser der Schutzvorrichtung 1 erweitert ist. Mit der Überlappungsbiegung 9 überragt der jeweilige Gehäuseteil 4a beziehungsweise 4b die nicht gebogene Umfangsseite des jeweils anderen Gehäuseteils 4b beziehungsweise 4a. In diesen Bereichen überlappen sich daher die Gehäuseteile 4a und 4b, so dass umfängliche dachartige Gehäuseüberlappungen ausgebildet sind. Ein Freiraum zwischen den einander zugewandten Umfangsseiten der Gehäuseteile 4a und 4b ist auf diese Weise vermieden. Die Elastomermatte 3 und somit die Radsatzwelle 2 sind auf diese Weise noch besser abgeschirmt. Zum Festspannen des Gehäuses 4 und der Elastomermatte 3 an der Radsatzwelle 2 dienen Haltemittel 11, die ein formflexibles Band aufweisen, das an seinen beiden freien Enden über Halteösen verfügt, die beispielsweise durch entsprechendes Umschlagen des Bandes und Annähen des umgeschlagenen Endes an das Band entstehen. Durch diese Halteöse erstreckt sich jeweils ein figürlich nicht dargestellter Spannbügel eines Spannverschlusses. Durch Drehen einer Gewindemutter oder dergleichen werden die Spannbügel aufeinander zu bewegt, so dass das Band zusammen gezogen wird. Dabei umschließt das Band das Gehäuse 4 und hält das Gehäuse 4 und die Elastomermatte 3 an der Radsatzwelle 2.

Figur 6 zeigt die Überlappungsbiegung 9 des Gehäuseteils 4b genauer. Es ist erkennbar, dass die Überlappungsbiegung 9 des Gehäuseteils 4b S-förmig verläuft, wobei sich die nicht gebogene freie Umfangsseite 10 des Gehäuseteils 4a unter die Überlappungsbiegung 9 erstreckt.

## Patentansprüche

1. Radsatzwelle (2) eines Schienenfahrzeugs, umfassend eine Schutzvorrichtung (1) mit einer an die Radsatzwelle (2) anlegbaren Elastomermatte (3), einem die Elastomermatte (3) zumindest teilweise umschließenden Gehäuse (4) aus einem formfesten Material und Haltemitteln (11), die zum Halten der Elastomermatte (3) sowie des Gehäuses (4) an der Radsatzwelle (2) eingerichtet sind,
**dadurch gekennzeichnet, dass** das Gehäuse (4) an seinen beiden einander gegenüber liegenden freien Enden (5, 6), die im montierten Zustand jeweils einem Rad zugewandt sind, Einschnitte (7) aufweist.

2. Radsatzwelle (2) nach Anspruch 1,
**dadurch gekennzeichnet, dass** die Elastomermatte (3) und/oder das Gehäuse (4) so ausgestattet sind, dass nach der Montage die Radsatzwelle (2) umfänglich vollständig umschlossen ist.

3. Radsatzwelle (2) nach Anspruch 1 oder 2,
**dadurch gekennzeichnet, dass** das Gehäuse (4) und/oder die Elastomermatte (3) aus mehreren separaten Teilen bestehen.

4. Radsatzwelle (2) nach einem der Ansprüche 1 bis 3,
**dadurch gekennzeichnet, dass** das Gehäuse (4) aus einem Blech gefertigt ist.

5. Radsatzwelle (2) nach einem der Ansprüche 1 bis 4,
**dadurch gekennzeichnet, dass** die Haltemittel (11) als Schlauchschellen und/oder Spannverschlüsse ausgebildet sind.

6. Radsatzwelle (2) nach einem der Ansprüche 1 bis 5,
**dadurch gekennzeichnet, dass** das Gehäuse (4) wenigstens eine Überlappungsbiegung (9) zum Ausbilden einer umfänglichen Gehäuseüberlappung aufweist.

7. Schienenfahrzeug mit wenigstens einer Radsatzwelle (2) gemäß einem der Ansprüche 1 bis 6.

8. Drehgestell mit wenigstens einer Radsatzwelle (2) gemäß einem der Ansprüche 1 bis 6.

## Claims

1. Wheelset axle (2) of a rail vehicle, comprising a protection device (1), having an elastomeric mat (3) which may be applied to the wheelset axle (2), a housing (4) of a non-deformable material at least partially enclosing the elastomeric mat (3) and retaining means (11) designed to retain the elastomeric mat (3) and the housing (4) on the wheelset axle (2),
**characterized in that** the housing (4) comprises incisions (7) at its two mutually facing free ends (5, 6), which when mounted each face a wheel.

2. Wheelset axle (2) according to Claim 1, **characterized in that** the elastomeric mat (3) and/or the housing (4) are provided such that, after mounting, the wheelset axle (2) is extensively and completely enclosed.

3. Wheelset axle (2) according to Claim 1 or 2, **characterized in that** the housing (4) and/or the elastomeric mat (3) consist of a plurality of separate parts.

4. Wheelset axle (2) according to one of Claims 1 to 3, **characterized in that** the housing (4) is made of sheet metal.

5. Wheelset axle (2) according to one of Claims 1 to 4, **characterized in that** the retaining means (11) are configured as hose clips and/or clamping fasteners.

6. Wheelset axle (2) according to one of Claims 1 to 5, **characterized in that** the housing (4) comprises at least one overlap deflection (9) for forming an extensive housing overlap.

7. Rail vehicle with at least one wheelset axle (2) according to one of Claims 1 to 6.

8. Bogie with at least one wheelset axle (2) according to one of Claims 1 to 6.

## Revendications

1. Arbre d'essieu (2) d'un véhicule ferroviaire, comprenant un dispositif de protection (1) muni d'un tapis élastomère (3) pouvant être mis en place au niveau de l'arbre d'essieu (2), d'une enceinte (4) entourant au moins partiellement le tapis élastomère (3) et constituée d'un matériau indéformable, et de moyens de retenue (11) fournis de manière à retenir le tapis élastomère (3) ainsi que l'enceinte (4) sur l'arbre d'essieu (2),
**caractérisé en ce que** l'enceinte (4) présente des entailles (7) au niveau de ses deux extrémités libres (5, 6) opposées et, à l'état monté, tournées respectivement vers une roue.

2. Arbre d'essieu (2) selon la revendication 1,
**caractérisé en ce que**
le tapis élastomère (3) et/ou l'enceinte (4) est/sont conçu(e)(s) de sorte que, après le montage, l'arbre d'essieu (2) est complètement entouré de manière circonférentielle.

3. Arbre d'essieu (2) selon la revendication 1 ou 2, **caractérisé en ce que**
l'enceinte (4) et/ou le tapis élastomère (3) est/sont constitué(e)(s) de plusieurs parties distinctes.

4. Arbre d'essieu (2) selon l'une quelconque des revendications 1 à 3,
**caractérisé en ce que**,
l'enceinte (4) est fabriquée à partir d'une tôle.

5. Arbre d'essieu (2) selon l'une quelconque des revendications 1 à 4,
**caractérisé en ce que**
les moyens de retenue (11) sont réalisés sous forme de colliers de caoutchouc et/ou de fermetures à levier.

6. Arbre d'essieu (2) selon l'une quelconque des revendications 1 à 5,
**caractérisé en ce que**
l'enceinte (4) présente au moins un coude de recouvrement (9) destiné à constituer un recouvrement d'enceinte périphérique.

7. Véhicule ferroviaire comprenant au moins un arbre d'essieu (2) selon l'une quelconque des revendications 1 à 6.

8. Bogie comprenant au moins un arbre d'essieu (2) selon l'une quelconque des revendications 1 à 6.
